# EUROPEAN PATENT APPLICATION

(11) **EP 4 783 263 A1**
(43) Date of publication of application: **29.07.2026**
(21) Application number: 24886194.0
(22) Date of filing: 29.10.2024
(51) Int. Cl.: H01M 4/525, H01M 4/505, H01M 4/02

(54) **POSITIVE ELECTRODE ACTIVE MATERIAL AND PREPARATION METHOD THEREFOR**

(30) Priority: 02.11.2023 KR 20230150223
(71) Applicant: LG Chem, Ltd., Seoul 07336 (KR)
(72) Inventor: CHOI, Jong Hyun, Daejeon 34122 (KR); YOON, Seok Hyun, Daejeon 34122 (KR)
(74) Representative: Hoffmann Eitle
(86) International application number: PCT/KR2024/016618
(87) International publication number: WO 2025/095520

(57) **Abstract**

A positive electrode active material according to one embodiment of the present invention may comprise a nickel-rich metal oxide, wherein the nickel-rich metal oxide includes: a first metal element having an oxidation number of +6; a second metal element having an oxidation number of +5; a third metal element having an oxidation number of +4; and a fourth metal element having an oxidation number of +2 or +3.

## Description

### Technical Field

### [CROSS-REFERENCE TO RELATED APPLICATION]

The present application claims priority to Korean Patent Application No. 2023-0150223, filed on November 2, 2023, the entire content of which is incorporated herein for all purposes by reference**.**

### [Technical Field]

The present invention relates to a positive electrode active material and a method for producing the same.

### Background Art

Lithium secondary batteries capable of being repeatedly charged and discharged are in the spotlight as an alternative to fossil fuels. The lithium secondary batteries have been mainly used in traditional hand-held devices such as mobile phones, video cameras, and power tools. However, recently, their application fields have been gradually expanding to electric-powered vehicles (EVs, HEVs, PHEVs), large-capacity power storage systems (ESSs), and uninterruptible power supply systems (UPSs). The lithium secondary batteries include: an electrode assembly comprising unit cells having a structure in which a positive electrode plate and a negative electrode plate having a current collector coated with an active material are disposed with a separator interposed therebetween, and an exterior material, that is, a battery case, that seals and accommodates the electrode assembly together with an electrolyte.

As a positive electrode active material of the lithium secondary batteries, lithium composite transition metal oxides are used, and among them, lithium cobalt oxide of LiCoO₂, lithium manganese oxide (such as LiMnO₂ or LiMn₂O₄), lithium iron phosphate compound (LiFePO₄),LiNiO_{2,} or the like are mainly used. In addition, as a method for improving the low thermal stability while maintaining the excellent reversible capacity of LiNiO₂, nickel manganese-based lithium composite metal oxides in which some of the nickel is replaced with manganese, which has excellent thermal stability, and NCM in which some of the nickel is replaced with manganese and cobalt are used.

Nickel-rich transition metal oxide (high Ni NCM) refers to a transition metal oxide having a nickel content of 80% or more among layered transition metal oxides. The transition metals that are widely used as battery positive electrode materials are nickel, cobalt, and manganese. Among them, only nickel can change its valence from +2 to +4. Therefore, when the nickel content in the high Ni NCM increases, the number of lithium that can enter the lithium layer can be doubled compared to when other transition metals are used, so the capacity increases. When the nickel content is 80% or more, Ni-rich oxide shows a high capacity of 200 mAh/g, which is the second highest capacity after lithium-rich oxide.

High Ni NCM not only has a high capacity, but also does not need to increase the operating voltage like lithium-rich oxide for high capacity, and has an electrical conductivity of 10-5 S/cm, which is lower than that of LCO but is quite high, so there is no significant decrease in capacity even at high C rates. It has a very low production cost because it is mostly composed of nickel, which is relatively cheaper than Co, and is also environmentally friendly.

However, the stability degradation and rapid performance reduction due to residual lithium should be addressed. In addition, the rapid cycle performance degradation is concerned with the side reaction between the unwanted tetravalent transition metal ions (especially Ni⁴⁺) and the electrolyte. The highly activated Ni⁴⁺ ions can accelerate the electrolyte decomposition, which not only causes the depletion of the electrolyte and a thick SEI layer, but also has to do with the phase transition from a layered structure to a rock salt structure (NiO) on the surface of the particles. Both phenomena continuously cause a decrease in lithiation kinetics at the electrode-electrolyte interface.

On the other hand, the low thermal stability causes the release of oxygen from the crystal structure in a state in which a large amount of lithium has escaped. This oxygen oxidizes the electrolyte to easily produce HF or LiF, which accelerates gas generation or rapidly reduces the electrochemical characteristics of the active material. Therefore, the capacity degradation occurs rapidly. High Ni NCM is very vulnerable to stability because the structural and electrochemical performance degradation inherent at high temperatures (> 60 degrees) and high voltages (> 4.5 V) occurs faster than conventional layered structures, and the amount of gas generated inside the battery is also large.

### [Prior Art Literature]

### [Patent Documents]

(Patent Document 0001) CN 115548294 A

### Disclosure

### Technical Problem

The present invention provides a positive electrode active material having improved stability by doping four or more metal elements into a high-nickel NCM lithium composite metal oxide to lower the Gibbs free energy.

### Technical Solution

(1) The present invention provides a positive electrode active material comprising a nickel-rich metal oxide, wherein the nickel-rich metal oxide includes: a first metal element having an oxidation number of +6; a second metal element having an oxidation number of +5; a third metal element having an oxidation number of +4; and a fourth metal element having an oxidation number of +2 or +3.
(2) The present invention provides a positive electrode active material comprising a lithium composite metal oxide represented by Chemical Formula 1 below:

   [Chemical Formula 1] LiₐNi_{b}Co_{c}Mn_{d}M¹ₑM²_{f}M³_{g}M⁴ₕO₂

   wherein:
   the M¹ is one selected from the group consisting of metal elements having an oxidation number of +6,
   the M² is one selected from the group consisting of metal elements having an oxidation number of +5,
   the M³ is one selected from the group consisting of metal elements having an oxidation number of +4,
   the M⁴ is one selected from the group consisting of metal elements having an oxidation number of +2 or +3, and
   0.8≤a≤1.2, 0.8≤b<1.0, 0<c≤0.09, 0<d≤0.09, 0<e≤0.05, 0<f≤0.05, 0<g≤0.05, and 0<h≤0.05.
(3) The present invention provides the positive electrode active material according to (2) above, wherein in Chemical Formula 1 above, the M¹ is one selected from the group consisting of Cr, Mo, W, and Sg.
(4) The present invention provides the positive electrode active material according to (2) or (3) above, wherein in Chemical Formula 1 above, the M² is one selected from the group consisting of Nb, V, Ta, and Db.
(5) The present invention provides the positive electrode active material according to any one of (2) to (4) above, wherein, the M³ is one selected from the group consisting of Ti, Zr, Hf, and Rf.
(6) The present invention provides the positive electrode active material according to any one of (2) to (5) above, wherein, the M⁴ is one selected from the group consisting of Al, Sc, Y, Mg, Ca, and Sr.
(7) The present invention provides the positive electrode active material according to any one of (2) to (6) above, wherein in Chemical Formula 1 above, 0.005≤e≤0.03, 0.005≤f≤0.03, 0.005≤g≤0.03, and 0.005≤h≤0.03 are satisfied.
(8) The present invention provides the positive electrode active material according to any one of (2) to (7) above, wherein in Chemical Formula 1 above, 0.0025≤e≤0.02, 0.0025≤f≤0.02, 0.0025≤g≤0.02, and 0.0025≤h≤0.02 are satisfied.
(9) The present invention provides the positive electrode active material according to any one of (2) to (8) above, wherein the lithium composite metal oxide is represented by Chemical Formula 2 below:

   [Chemical Formula 2] LiₐNi_{b}Co_{c}Mn_{d}MoₑNb_{f}M³_{g}M⁴ₕO₂

   wherein:
   the M³ and M⁴ are different from each other, and are one selected from the group consisting of Ti, Zr, Hf, Rf, Al, Sc, Y, Mg, Ca, and Sr, and
   0.8≤a≤1.2, 0.8≤b<1.0, 0<c≤0.09, 0<d≤0.09, 0<e≤0.05, 0<f≤0.05, 0<g≤0.05, and 0<h≤0.05.
(10) The present invention provides the positive electrode active material according to any one of (2) to (9) above, wherein the lithium composite metal oxide is represented by Chemical Formula 3 below:

   [Chemical Formula 3] LiₐNi_{b}Co_{c}Mn_{d}MoₑV_{f}M³_{g}M⁴ₕO₂

   wherein:
   the M³ and M⁴ are different from each other, and are one selected from the group consisting of Ti, Zr, Hf, Rf, Al, Sc, Y, Mg, Ca, and Sr, and
   0.8≤a≤1.2, 0.8≤b<1.0, 0<c≤0.09, 0<d≤0.09, 0<e≤0.05, 0<f≤0.05, 0<g≤0.05, and 0<h≤0.05.
(11) The present invention provides the positive electrode active material according to any one of (2) to (10) above, wherein the lithium composite metal oxide is represented by Chemical Formula 4 below:

   [Formula 4] LiₐNi_{b}Co_{c}Mn_{d}WₑNb_{f}M³_{g}M⁴ₕO₂

   wherein:
   the M³ and M⁴ are different from each other, and are one selected from the group consisting of Ti, Zr, Hf, Rf, Al, Sc, Y, Mg, Ca, and Sr, and
   0.8≤a≤1.2, 0.8≤b<1.0, 0<c≤0.09, 0<d≤0.09, 0<e≤0.05, 0<f≤0.05, 0<g≤0.05, and 0<h≤0.05.
(12) The present invention provides the positive electrode active material according to any one of (2) to (11) above, wherein the lithium composite metal oxide is represented by Chemical Formula 5 below:

   [Formula 5] LiₐNi_{b}Co_{c}Mn_{d}WₑV_{f}M³_{g}M⁴ₕO₂

   wherein:
   the M³ and M⁴ are different from each other, and are one selected from the group consisting of Ti, Zr, Hf, Rf, Al, Sc, Y, Mg, Ca, and Sr, and
   0.8≤a≤1.2, 0.8≤b<1.0, 0<c≤0.09, 0<d≤0.09, 0<e≤0.05, 0<f≤0.05, 0<g≤0.05, and 0<h≤0.05.

### Advantageous Effects

The positive electrode active material according to the present invention has improved stability by mixing four or more metals into a high-nickel NCM lithium composite metal oxide to lower the Gibbs free energy.

### Best Modes of the Invention

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

In the present invention, the content of elements doped in the lithium composite metal oxide can be measured by inductively coupled plasma optical emission spectroscopy (ICP-OES). Specifically, it means that 0.03 g of the positive electrode active material to be analyzed is dispersed and dissolved in 1 mL of hydrochloric acid, followed by the addition of a small amount of hydrogen peroxide and hydrofluoric acid, diluted with 50 mL of ultrapure water, and then analyzed using an Avio series (PerkinElmer, Inc.) device.

In the present invention, "crystallite" refers to a particle unit having substantially the same crystal orientation, and can be confirmed through Electron Backscatter Diffraction (EBSD) analysis. Specifically, it is the smallest particle unit displayed in the same color in the IPF map obtained by EBSD analysis of a cross-section of the positive electrode active material cut through ion milling.

### <Positive Electrode Active Material>

The present invention provides a positive electrode active material.

The positive electrode active material according to one embodiment of the present invention is a positive electrode active material comprising a nickel-rich metal oxide, wherein the nickel-rich metal oxide includes: a first metal having an oxidation number of +6; a second metal having an oxidation number of +5; a third metal having an oxidation number of +4; and a fourth metal having an oxidation number of +2 or +3.

According to one embodiment of the present invention, the nickel-rich metal oxide means that the content of nickel in the layered transition metal oxide is 80% or more.

Conventional nickel-rich metal oxides containing nickel, cobalt, and manganese contain nickel in an amount of 80% or more in the layered transition metal oxide, so that they can secure high capacity, but have a problem of deteriorating structural stability. Specifically, a positive electrode active material comprising a nickel-rich metal oxide has a disadvantage of undergoing a lot of changes in lattice constants, that is, changes in volume within a unit lattice, and such volume changes may cause cracks to occur within active material particles. Such cracks can cause voids to occur within the active material, which can lead to deterioration in battery performance.

The present inventors have found that when a nickel-rich metal oxide is doped with four different types of metal elements, including a first metal element having an oxidation number of +6, a second metal element having an oxidation number of +5, a third metal element having an oxidation number of +4, and a fourth metal element having an oxidation number of +2 or +3, the configurational entropy increases to increase the solubility of the constituent elements, and the effective diffusion rate is limited, so that phase separation is suppressed at high temperatures, allowing for the synthesis of a higher concentration of solid solution, whereby regular intermetallic compounds are not formed, and the free energy can be lowered by forming a single phase having a structure much smaller than the number of phases allowed by the Gibbs phase law, and the lattice deformation effect helps the improvement of mechanical strength and the diffusion of lithium ion, and thus the stability can be improved, thereby completing the present invention.

The positive electrode active material according to one embodiment of the present invention includes a lithium composite metal oxide represented by Chemical Formula 1 below:

[Chemical Formula 1] LiₐNi_{b}Co_{c}Mn_{d}M¹ₑM²_{f}M³_{g}M⁴ₕO₂

wherein:
the M¹ is one selected from the group consisting of metal elements having an oxidation number of +6,
the M² is one selected from the group consisting of metal elements having an oxidation number of +5,
the M³ is one selected from the group consisting of metal elements having an oxidation number of +4,
the M⁴ is one selected from the group consisting of metal elements having an oxidation number of +2 or +3, and
0.8≤a≤1.2, 0.8≤b<1.0, 0<c≤0.09, 0<d≤0.09, 0<e≤0.05, 0<f≤0.05, 0<g≤0.05, 0<h≤0.05, and b+c+d+e+f+g+h = 1.

According to one embodiment of the present invention, the a represents a molar ratio of lithium in the lithium composite metal oxide, and may be 0.8 or more and 1.2 or less, and as specific examples, 0.84 or more, 0.88 or more, 0.92 or more, 0.96 or more, or 1.00 or more, and also 1.18 or less, 1.16 or less, 1.14 or less, 1.12 or less, 1.10 or less, 1.08 or less, 1.06 or less, or 1.04 or less.

According to one embodiment of the present invention, the b represents a molar ratio of nickel in the lithium composite metal oxide, and may be 0.8 or more and less than 1.0, and for specific examples, 0.81 or more, 0.82 or more, 0.83 or more, 0.84 or more, or 0.85 or more, and also 0.98 or less, 0.96 or less, 0.94 or less, 0.92 or less, 0.90 or less, or 0.88 or less.

According to one embodiment of the present invention, the c represents a molar ratio of cobalt in the lithium composite metal oxide, and may be more than 0 and 0.09 or less, and for specific examples, 0.001 or more, 0.002 or more, 0.003 or more, 0.004 or more, or 0.005 or more, and also 0.08 or less, 0.07 or less, 0.06 or less, 0.05 or less, 0.04 or less, or 0.03 or less.

According to one embodiment of the present invention, the d represents a molar ratio of manganese in the lithium composite metal oxide, and may be more than 0 and 0.09 or less, and for specific examples, 0.001 or more, 0.002 or more, 0.003 or more, 0.004 or more, or 0.005 or more, and also 0.08 or less, 0.07 or less, 0.06 or less, 0.05 or less, 0.04 or less, or 0.03 or less.

According to one embodiment of the present invention, the e represents a molar ratio of M¹, a metal having an oxidation number of +6, in the lithium composite metal oxide, and may be more than 0 and 0.05 or less, and for specific examples, 0.001 or more, 0.0015 or more, 0.0025 or more, 0.003 or more, 0.0035 or more, 0.004 or more, 0.0045 or more, or 0.005 or more, and also 0.047 or less, 0.044 or less, 0.041 or less, 0.038 or less, 0.035 or less, or 0.03 or less. When the above-described range is satisfied, the Gibbs energy of the positive electrode active material can be lowered, thereby improving the structural stability.

According to one embodiment of the present invention, the M¹ is a metal element having an oxidation number of +6, and may be one selected from the group consisting of Cr, Mo, W, and Sg. Since the metal element with an oxidation number of +6 plays a significant role in reducing Gibbs free energy while minimizing capacity reduction, when the positive electrode active material includes four types of metal elements but does not include M¹, a metal element with an oxidation number of +6, the Gibbs free energy of the positive electrode active material may not decrease, or the capacity may decrease.

According to one embodiment of the present invention, the f represents a molar ratio of M² in the lithium composite metal oxide, and may be more than 0 and 0.05 or less, and for specific examples, 0.001 or more, 0.0015 or more, 0.0025 or more, 0.003 or more, 0.0035 or more, 0.004 or more, 0.0045 or more, or 0.005 or more, and also 0.047 or less, 0.044 or less, 0.041 or less, 0.038 or less, 0.035 or less, or 0.03 or less. When the above-described range is satisfied, the Gibbs energy of the positive electrode active material can be lowered, thereby improving the structural stability.

According to one embodiment of the present invention, the M² is a metal element having an oxidation number of +5, and may be one selected from the group consisting of Nb, V, Ta, and Db.

According to one embodiment of the present invention, the g represents a molar ratio of M³ in the lithium composite metal oxide, and may be more than 0 and 0.05 or less, and for specific examples, 0.001 or more, 0.0015 or more, 0.0025 or more, 0.003 or more, 0.0035 or more, 0.004 or more, 0.0045 or more, or 0.005 or more, and also 0.047 or less, 0.044 or less, 0.041 or less, 0.038 or less, 0.035 or less, or 0.03 or less. When the above-described range is satisfied, the Gibbs energy of the positive electrode active material can be lowered, thereby improving the structural stability.

According to one embodiment of the present invention, the M³ is a metal element having an oxidation number of +4 and may be one selected from the group consisting of Ti, Zr, Hf, and Rf.

According to one embodiment of the present invention, the h represents a molar ratio of M⁴ in the lithium composite metal oxide, and may be more than 0 and 0.05 or less, and for specific examples, 0.001 or more, 0.0015 or more, 0.0025 or more, 0.003 or more, 0.0035 or more, 0.004 or more, 0.0045 or more, or 0.005 or more, and also 0.047 or less, 0.044 or less, 0.041 or less, 0.038 or less, 0.035 or less, or 0.03 or less. When the above-described range is satisfied, the Gibbs energy of the positive electrode active material can be lowered, thereby improving the structural stability.

According to one embodiment of the present invention, the M⁴ is a metal element having an oxidation number of +2 or +3 and may be one selected from the group consisting of Al, Sc, Y, Mg, Ca, and Sr.

Specifically, the positive electrode active material according to one embodiment of the present invention may include a lithium metal oxide represented by Chemical Formula 2 below:

[Chemical Formula 2] LiₐNi_{b}Co_{c}Mn_{d}MoₑNb_{f}M³_{g}M⁴ₕO₂

wherein:
the M³ and M⁴ are different metal elements, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

Specifically, the positive electrode active material according to one embodiment of the present invention may include a lithium metal oxide represented by Chemical Formula 3 below:

[Chemical Formula 3] LiₐNi_{b}Co_{c}Mn_{d}MoₑV_{f}M³_{g}M⁴ₕO₂

wherein:
the M³ and M⁴ are different metal elements, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

Specifically, the positive electrode active material according to one embodiment of the present invention may include a lithium metal oxide represented by Chemical Formula 4 below:

[Formula 4] LiₐNi_{b}Co_{c}Mn_{d}WₑNb_{f}M³_{g}M⁴ₕO₂

wherein:
the M³ and M⁴ are different metal elements, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

Specifically, the positive electrode active material according to one embodiment of the present invention may include a lithium metal oxide represented by Chemical Formula 5 below:

[Formula 5] LiₐNi_{b}Co_{c}Mn_{d}WₑV_{f}M³_{g}M⁴ₕO₂

wherein:
the M³ and M⁴ are different metal elements, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

### <Positive Electrode>

According to one embodiment of the present invention, a positive electrode including the positive electrode active material described above is provided.

Specifically, the positive electrode includes a positive electrode current collector and a positive electrode active material layer formed on the positive electrode current collector and including the positive electrode active material.

According to one embodiment of the present invention, the positive electrode current collector is not particularly limited as long as it has conductivity without causing a chemical change in the battery, and may be, for example, stainless steel, aluminum, nickel, titanium, calcined carbon, or aluminum or stainless steel having a surface treated with carbon, nickel, titanium, silver, etc. Additionally, the positive electrode current collector may typically have a thickness of 3 to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

According to one embodiment of the present invention, the positive electrode active material layer, along with the positive electrode active material described above, may include a conductive material and a binder.

According to one embodiment of the present invention, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be typically included in an amount of 1 to 30% by weight based on the total weight of the positive electrode active material layer.

According to one embodiment of the present invention, the binder serves to improve the bonding between the positive electrode active material particles and the adhesion between the positive electrode active material and the current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, or various copolymers thereof, and any one or a mixture of two or more thereof may be used. The binder may be included in an amount of 1 to 30% by weight based on the total weight of the positive electrode active material layer.

According to one embodiment of the present invention, the positive electrode may be manufactured according to a conventional positive electrode manufacturing method except for the use of the positive electrode active material described above. Specifically, it may be manufactured by applying a composition for forming a positive electrode active material layer onto a positive electrode current collector, and then drying and rolling, wherein the composition is prepared by mixing or dispersing the above-mentioned positive electrode active material and optionally, a binder and a conductive material in a solvent. The types and contents of the positive electrode active material, binder, and conductive material are as described above.

According to one embodiment of the present invention, the solvent may be any solvent commonly used in the art, for example, dimethyl sulfoxide (DMSO), isopropyl alcohol, N-methyl pyrrolidone (NMP), acetone, water, or the like, and any one or a mixture of two or more thereof may be used. The solvent may be used in an amount sufficient to dissolve or disperse the positive electrode active material, conductive material, and binder in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the composition for forming the positive electrode active material layer on a separate support, peeling a film from the support, and then laminating the film on a positive electrode current collector.

### <Lithium Secondary Battery>

According to one embodiment of the present invention, an electrochemical device including the positive electrode is provided. The electrochemical device may be specifically a battery, a capacitor, etc., and more specifically, a lithium secondary battery.

According to one embodiment of the present invention, specifically, the lithium secondary battery includes a positive electrode, a negative electrode positioned opposite the positive electrode, and a separator and electrolyte interposed between the positive electrode and the negative electrode, wherein the positive electrode is as described above. In addition, the lithium secondary battery may optionally further include a battery container for accommodating an electrode assembly formed of the positive electrode, negative electrode, and separator, and a sealing member for sealing the battery container.

According to one embodiment of the present invention, in the lithium secondary battery, the negative electrode includes a negative electrode current collector and a negative electrode active material layer positioned on the negative electrode current collector.

According to one embodiment of the present invention, the negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

According to one embodiment of the present invention, the negative electrode active material layer optionally includes a binder and a conductive material along with the negative electrode active material.

According to one embodiment of the present invention, as the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiOₓ(0 < x < 2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

In addition, the binder and the conductive material may be the same as described in the positive electrode above.

According to one embodiment of the present invention, for example, the negative electrode active material layer may be manufactured by applying a negative electrode-forming composition, which is prepared by dispersing a negative electrode active material, and optionally a binder and a conductive material in a solvent, onto a negative electrode current collector and drying the same. Alternatively, it may also be manufactured by casting the negative electrode-forming composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

According to one embodiment of the present invention, as the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

According to one embodiment of the present invention, the lithium salt may be any compound without particular limitation as long as it can provide lithium ions used in a lithium secondary battery. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

According to one embodiment of the present invention, in order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

According to one embodiment of the present invention, as described above, since the lithium secondary battery including the positive electrode active material according to the present invention stably exhibits excellent discharge capacity, output characteristics, and capacity retention rate, it is useful in the field of portable devices such as mobile phones, laptop computers, digital cameras, and electric vehicles such as hybrid electric vehicle (HEV).

Hereinafter, examples of the present invention will be described in detail so that those skilled in the art can easily implement the present invention. However, the present invention may be embodied in a variety of forms and is not limited to the examples described herein.

### Example 1

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (MgO, TiO₂, MoO₃, and Nb₂O₅) of each of the four different metal elements (Mg, Ti, Mo, and Nb) were weighed to have a molar ratio of Mg/Ti/Mo/Nb of 28.5:28.5:28.5:14.5. The raw materials of each of the four different metal elements (Mg, Ti, Mo, and Nb) were respectively added in an amount of 1 mol% based on the precursor, mixed, and heat-treated at 740°C for 13 hours in an oxygen atmosphere to produce a positive electrode active material.

### Example 2

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (MgO, TiO₂, MoO₃, V₂O₅) of each of the four different metal elements (Mg, Ti, Mo, and V) were weighed to have a molar ratio of Mg/Ti/Mo/V of 28.5:28.5:28.5:14.5. The raw materials of each of the four different metal elements (Mg, Ti, Mo, and V) were respectively added in an amount of 1 mol% based on the precursor, mixed, and heat-treated at 740°C for 13 hours in an oxygen atmosphere to produce a positive electrode active material.

### Example 3

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (MgO, TiO₂, WO₃, and Nb₂O₅) of each of the four different metal elements (Mg, Ti, W, and Nb) were weighed to have a molar ratio of Mg/Ti/W/Nb of 28.5:28.5:28.5:14.5. The raw materials of each of the four different metal elements (Mg, Ti, W, and Nb) were respectively added in an amount of 1 mol% based on the precursor, mixed, and heat-treated at 740°C for 13 hours in an oxygen atmosphere to produce a positive electrode active material.

### Example 4

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (MgO, TiO₂, WO₃, and V₂O₅) of each of the four different metal elements (Mg, Ti, W, and V) were weighed to have a molar ratio of Mg/Ti/W/V of 28.5:28.5:28.5:14.5. The raw materials of each of the four different metal elements (Mg, Ti, W, and V) were respectively added in an amount of 1 mol% based on the precursor, mixed, and heat-treated at 740°C for 13 hours in an oxygen atmosphere to produce a positive electrode active material.

### Example 5

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (Al₂O₃, ZrO₂, MoO₃, and Nb₂O₅) of each of the four different metal elements (Al, Zr, Mo, and Nb) were weighed to have a molar ratio of Al/Zr/W/V of 28.5:28.5:28.5:14.5. The raw materials of each of the four different metal elements (Al, Zr, W, and V) were respectively added in an amount of 1 mol% based on the precursor, mixed, and heat-treated at 740°C for 13 hours in an oxygen atmosphere to produce a positive electrode active material.

### Comparative Example 1

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, LiOH·H₂O and a NiCoMn(OH)₂ precursor having a ratio of 95:2:3 were mixed in a molar ratio of 1:0.99, and heat-treated at 740°C for 13 hours in an oxygen atmosphere to produce a positive electrode active material.

### Comparative Example 2

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (MgO, TiO₂, Al₂O₃, and Nb₂O₅) of each of the four different metal elements (Mg, Ti, Al, and Nb) were weighed to have a molar ratio of Mg/Ti/Al/Nb of 28.5:28.5:28.5:14.5. The raw materials of each of the four different metal elements (Al, Zr, W, and V) were respectively added in an amount of 1 mol% based on the precursor, mixed, and heat-treated at 740°C for 13 hours in an oxygen atmosphere to produce a positive electrode active material.

### Comparative Example 3

For precursor synthesis, Ni, Co, and Mn sulfate were quantified in a molar ratio of 95:2:3 so that the total concentration was 2.0 M, and then mixed in distilled water. 5 M NH₄OH and 2 M NaOH were added to an appropriate amount of mixed solvent, adjusted to pH 11 to 12, stirred at a reactor temperature of 50°C, coprecipitated, and dried at 120°C for 24 hours to synthesize a NiCoMn(OH)₂ precursor having a ratio of 95:2:3.

Thereafter, a molar ratio of LiOH·H₂O and a NiCoMn(OH)₂ precursor having a ratio of 95:2:3 was set to 1:0.99, and raw materials (MgO, TiO₂, and Nb₂O₅) of each of the three different metal elements (Mg, Ti, and Nb) were weighed to have a molar ratio of Mg/Ti/Nb of 40:40:20. The raw materials of each of the three different metal elements (Mg, Ti, and Nb) were respectively added in an amount of 1 mol% based on the precursor, mixed, and heat-treated at 740°C for 13 hours in an oxygen atmosphere to produce a positive electrode active material.

### Experimental Example 1 - X-Ray Diffraction Phase Analysis

The particles prepared in Examples 1 to 5 and Comparative Examples 1 to 3 were subjected to XRD analysis by Cu-Kα X-rays to confirm whether a secondary phase or a single phase was formed in the High Ni positive electrode material doped for actual high-entropy positive electrode synthesis. For this XRD analysis, an XRD analysis equipment of D8 Endeavor from Bruker was used.

The crystal size analysis of each sample was performed through XRD Rietveld analysis, and through this, the correlation with crystal size and capacity retention rate results according to doping elements were compared and analyzed.

### Experimental Example 2 - Evaluation of Electrochemical Characteristics

The electrochemical characteristics of the high-entropy High Ni positive electrode materials prepared in Examples 1 to 5 and Comparative Examples 1 to 3 were evaluated to confirm the discharge capacity, life characteristics, and rate characteristics, etc., and the correlation between the crystal size and the capacity retention rate according to the doping element was analyzed through Rietveld analysis of each sample.

Each positive electrode active material produced in Examples 1 to 5 and Comparative Examples 1 to 3, carbon black conductive material, and PVDF binder were mixed in a weight ratio of 96.25:1.65:2.1 in N-methylpyrrolidone solvent to prepare a slurry, which was then applied to one surface of an aluminum current collector, dried at 130°C, and rolled to manufacture an electrode. Thereafter, a coin half cell was manufactured to evaluate a 0.1C initial discharge capacity in a voltage range of 3-4.25V at 25°C, and a rate evaluation was conducted through 0.1C, 0.33C, 1C, and 2C discharges. In addition, the coin cell was transferred to a 45°C oven to evaluate a capacity retention rate by charging and discharging at 1C. The results were shown in Table 1 below.

**[Table 1]**

| | 0.1C charge/discharge capacity | 50 cycle capacity retention rate | Rate characteristics | Crystal size |
|---|---|---|---|---|
| Example 1 | 226.1 | 93.2 | 95.3 | 74.8 |
| Example 2 | 225.8 | 92.8 | 95.4 | 71.4 |
| Example 3 | 225.4 | 92.6 | 95.1 | 86.5 |
| Example 4 | 224.9 | 91.8 | 94.9 | 99.3 |
| Example 5 | 224.8 | 92.1 | 94.3 | 77.1 |
| Comparative Example 1 | 228.4 | 88.3 | 94.6 | 127.3 |
| Comparative Example 2 | 223.5 | 91.2 | 94.2 | 78.8 |
| Comparative Example 3 | 223.6 | 90.7 | 94.8 | 76.2 |

Referring to Table 1 above, it could be confirmed that Examples 1 to 4, which include a metal element having an oxidation number of +6, a metal element having an oxidation number of +5, a metal element having an oxidation number of +4, and a metal element having an oxidation number of +3 or +2 in addition to Ni, Co, and Mn, satisfied excellent charge/discharge capacity, capacity retention rate, and rate characteristics.

It could be confirmed that Comparative Example 1, which does not include any metal element other than Ni, Co, and Mn, has a lower capacity retention rate compared to Examples 1 to 4.

It could be confirmed that Comparative Example 2, which includes four types of metal elements other than Ni, Co, and Mn but does not include any metal element having an oxidation number of +6, has a lower charge/discharge capacity and capacity retention rate compared to Examples 1 to 4.

It could be confirmed that Comparative Example 3, which includes three types of metal elements other than Ni, Co, and Mn but does not include any metal element having an oxidation number of +6, has a lower charge/discharge capacity and capacity retention rate compared to Examples 1 to 4.

## Claims

1. A positive electrode active material comprising a nickel-rich metal oxide, wherein the nickel-rich metal oxide includes:
a first metal element having an oxidation number of +6;
a second metal element having an oxidation number of +5;
a third metal element having an oxidation number of +4; and
a fourth metal element having an oxidation number of +2 or +3.

2. A positive electrode active material comprising a lithium composite metal oxide represented by Chemical Formula 1 below:
[Chemical Formula 1] LiₐNi_{b}Co_{c}Mn_{d}M¹ₑM²_{f}M³_{g}M⁴ₕO₂
wherein:
the M¹ is one selected from the group consisting of metal elements having an oxidation number of +6,
the M² is one selected from the group consisting of metal elements having an oxidation number of +5,
the M³ is one selected from the group consisting of metal elements having an oxidation number of +4,
the M⁴ is one selected from the group consisting of metal elements having an oxidation number of +2 or +3, and
0.8≤a≤1.2, 0.8≤b<1.0, 0<c≤0.09, 0<d≤0.09, 0<e≤0.05, 0<f≤0.05, 0<g≤0.05, and 0<h≤0.05.

3. The positive electrode active material according to claim 2, wherein in Chemical Formula 1 above, the M¹ is one selected from the group consisting of Cr, Mo, W, and Sg.

4. The positive electrode active material according to claim 2, wherein in Chemical Formula 1 above, the M² is one selected from the group consisting of Nb, V, Ta, and Db.

5. The positive electrode active material according to claim 2, wherein, the M³ is one selected from the group consisting of Ti, Zr, Hf, and Rf.

6. The positive electrode active material according to claim 2, wherein, the M⁴ is one selected from the group consisting of Al, Sc, Y, Mg, Ca, and Sr.

7. The positive electrode active material according to claim 2, wherein in Chemical Formula 1 above, 0.005≤e≤0.03, 0.005≤f≤0.03, 0.005≤g≤0.03, and 0.005≤h≤0.03 are satisfied.

8. The positive electrode active material according to claim 2, wherein in Chemical Formula 1 above, 0.0025≤e≤0.02, 0.0025≤f≤0.02, 0.0025≤g≤0.02, and 0.0025≤h≤0.02 are satisfied.

9. The positive electrode active material according to claim 2, wherein the lithium composite metal oxide is represented by Chemical Formula 2 below:
[Chemical Formula 2] LiₐNi_{b}Co_{c}Mn_{d}MoₑNb_{f}M³_{g}M⁴ₕO₂
wherein:
the M³ and M⁴ are different from each other, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

10. The positive electrode active material according to claim 2, wherein the lithium composite metal oxide is represented by Chemical Formula 3 below:
[Chemical Formula 3] LiₐNi_{b}Co_{c}Mn_{d}MoₑV_{f}M³_{g}M⁴ₕO₂
wherein:
the M³ and M⁴ are different from each other, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

11. The positive electrode active material according to claim 2, wherein the lithium composite metal oxide is represented by Chemical Formula 4 below:
[Formula 4] LiₐNi_{b}Co_{c}Mn_{d}WₑNb_{f}M³_{g}M⁴ₕO₂
wherein:
the M³ and M⁴ are different from each other, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.

12. The positive electrode active material according to claim 2, wherein the lithium composite metal oxide is represented by Chemical Formula 5 below:
[Formula 5] LiₐNi_{b}Co_{c}Mn_{d}WₑV_{f}M³_{g}M⁴ₕO₂
wherein:
the M³ and M⁴ are different from each other, and are one selected from the group consisting of Ti, Zr, Hf, Rf, Al, Sc, Y, Mg, Ca, and Sr, and
0.8≤a≤1.2, 0.8≤b<1.0, 0<c≤0.09, 0<d≤0.09, 0<e≤0.05, 0<f≤0.05, 0<g≤0.05, and 0<h≤0.05.
